**Europäisches Patentamt**

(19)　**European Patent Office**

　　**Office européen des brevets**

(11)　**EP 1 082 569 B1**

(12)　**EUROPÄISCHE PATENTSCHRIFT**

| | |
|---|---|
| (45) Veröffentlichungstag und Bekanntmachung des Hinweises auf die Patenterteilung:<br>**14.05.2003 Patentblatt 2003/20** | (51) Int Cl.⁷: **F16L 37/14** |
| (21) Anmeldenummer: **00908901.2** | (86) Internationale Anmeldenummer:<br>**PCT/CH00/00164** |
| (22) Anmeldetag: **21.03.2000** | (87) Internationale Veröffentlichungsnummer:<br>**WO 00/060270 (12.10.2000 Gazette 2000/41)** |

(54) **SCHNELLKUPPLUNGS-VORRICHTUNG FÜR ROHRFÖRMIGE BAUTEILE**

QUICK COUPLING DEVICE FOR TUBULAR COMPONENTS

DISPOSITIF DE RACCORD RAPIDE POUR ELEMENTS TUBULAIRES

| | |
|---|---|
| (84) Benannte Vertragsstaaten:<br>**AT BE CH CY DE DK ES FI FR GB GR IE IT LI LU MC NL PT SE** | (73) Patentinhaber: **Bucher-Guyer AG**<br>**8166 Niederweningen (CH)** |
| (30) Priorität: **01.04.1999 CH 63199** | (72) Erfinder: **HARTMANN, Eduard**<br>**CH-5425 Schneisingen (CH)** |
| (43) Veröffentlichungstag der Anmeldung:<br>**14.03.2001 Patentblatt 2001/11** | (56) Entgegenhaltungen:<br>**WO-A-90/13752　　　US-A- 3 314 696**<br>**US-A- 4 009 896** |

**Beschreibung**

TECHNISCHES GEBIET

Die Erfindung betrifft eine Schnellkupplungs-Vorrichtung eines ersten rohrförmigen Bauteiles mit einem zweiten rohrförmigen Bauteil, wobei im Kupplungsbereich der Aussendurchmesser des ersten Bauteiles nicht grösser ist, als der Innendurchmesser des zweiten Bauteiles, mit mindestens einem Abstützelement am ersten Bauteil und mindestens einem Durchbruch im zweiten Bauteil zur Aufnahme einer elastisch verformbaren Halteeieinheit, welche am ersten oder am zweiten Bauteil angebracht ist und die im zusammengesteckten Zustand der rohrförmigen Bauteile das Abstützelement gegen Herausziehen sichert.

Derartige Vorrichtungen werden in Anlagen eingesetzt, bei denen eine Vielzahl von Verarbeitungsleitungen für eine Flüssigkeit einerseits an eine Zuführleitung und andererseits an eine Abführleitung anzuschliessen sind. Die Verarbeitungsleitungen unterliegen einer Alterung, welche von Zeit zu Zeit eine Kontrolle und einen Wechsel erforderlich macht. Die Schnellkupplungs-Vorrichtungen sollen einen einfachen Ver-bindungs- und Lösevorgang der Verarbeitungsleitun-gen ermöglichen und bei geringem Platzbedarf und guter Zugänglichkeit eine mit Lebensmitteln verträgliche zuverlässige Funktion gewährleisten.

STAND DER TECHNIK

Eine Schnapp-Kupplung für Flüssigkeits-Leitungen ist aus US-A-3,847,393 (Busselmeier) bekannt. Sie besitzt ein äusseres Kupplungs-Element mit einer umfassenden Wand, welche Öffnungen besitzt und einen Innenraum begrenzt. Ein inneres Kupplungs-Element kann axial in den Innenraum eingeschoben werden. Ein Betätigungselement umfasst aussen das äussere Kupplungs-Element und kann axial in eine und aus einer Arbeitslage verschoben werden. Ein VerriegelungsElement hat eine Anzahl Nasen, welche durch die Öffnungen des äusseren Kupplungs-Elementes gespannt werden und mit Vorsprüngen an dem inneren Kupplungs-Element zusammenwirken und dieses nach dem Einschieben zurückhalten. Eine Löse-Vorrichtung umfasst zusammenwirkende Löse- und Halteteile am Betätigungselement, welche die Nasen aus dem Innenraum herausheben, wenn das Betätigungselement in seine Arbeitslage verschoben wird.

Aus DE 196 15 442 A1 (A. Gerich) ist auch schon eine Steckschnellkupplungs-Vorrichtung für Wellenschläuche bekannt. Sie besitzt einen Kupplungskörper mit einem Einsteckbereich und einer zur Achse ge-neigt angeordneten, elastisch verformbaren Rastein-heit, welche in eine entsprechende Ausnehmung am Wellenschlauch einrastet. Die Rasteinheit ist im Kupplungskörper zwischen zwei parallelen Schlitzen angeordnet und weist ein angeformtes erstes und zweites Federelement auf, welche über ein Filmscharnier miteinander gekoppelt sind.

Weitere bekannte Schnellverschlüsse sind entweder durch eine Drehbewegung oder über eine Drucktaste schaltbar und weisen ebenfalls eine Vielzahl von Bauteilen auf. Sie haben für gewisse Anwendungen einen oder mehrere der folgenden Nachteile:

- schlechte Zugänglichkeit und Schaltbarkeit in Einbaustellung,
- Öffnung bei seitlichem Stoss,
- Behinderungen beim Reinigen von aussen,
- mangelhafte Eignung für allseitigen Kontakt mit Lebensmitteln,
- zu geringe Schliesskraft,
- zu grosser Platzbedarf.

DARSTELLUNG DER ERFINDUNG

Ausgehend von dem oben genannten Stand der Technik liegt der Erfindung die Aufgabe zugrunde, die gattungsgemässe Schnellkupplungs-Vorrichtung so weiterzubilden, dass sie eine geringe Anzahl von Bauteilen und einen geringen Platzbedarf aufweist, gut zugänglich ist, damit eine wirtschaftliche Montage gewährleistet und darüber hinaus für die Verarbeitung von Lebensmitteln geeignet ist.

Die Erfindung ist durch die Merkmale des unabhängigen Anspruches 1 gegeben. Vorteilhafte Ausgestaltungen und Weiterbildungen sind durch die Merkmale der abhängigen Ansprüche gegeben.

Demgemäss zeichnet sich die erfindungsgemässe Schnellkupplungs-Vorrichtung der eingangs genannten Art dadurch aus, dass die Halteeinheit als einstückiger Federdraht ausgebildet ist, welcher durch eine Auflage in mindestens zwei Punkten in einer Radialebene an der Aussenfläche des ersten bzw. zweiten Bauteiles und in mindestens einem weiteren Punkt innerhalb oder ausserhalb der Radialebene an dem ersten bzw. zweiten Bauteil abgestützt ist und mindestens ein senkrecht zu der Achse des ersten bzw. zweiten rohrförmigen Bauteiles ausgerichtetes Ende aufweist, welches mindestens eine Öffnung im zweiten Bauteil durchdringt, das Abstützelement am ersten Bauteil verriegelt und gegen eine Federkraft der Halteeinheit radial in eine entriegelnde Lage angehoben werden kann.

Gemäss einer besonders bevorzugten Ausgestaltung der erfindungsgemässen Schnellkupplungs-Vorrichtung liegt ein erster Teil des Federdrahtes in der Radialebene mit mindestens zwei Auflagepunkten und ein zweiter Teil in einer zu dieser Radialebene senkrechten Ebene, welche die gemeinsame Achse der zwei rohrförmigen Bauteile einschliesst. Auch weist der Federdraht der Halteeinheit an jedem verriegelnden Ende einen Abschnitt auf, welcher als Schaltstelle ein Abheben des Endes mittels eines Werkzeuges zur Entriegelung erlaubt.

Eine im Hinblick auf eine Verwendung mit Lebensmitteln besonders reinigungsfreundliche Ausführungsform der Erfindung zeichnet sich dadurch aus, dass das zweite rohrförmige Bauteil an seinem Einsteckende auf einer Seite seiner Längsachse eine vorsprungartige Verlängerung seines Mantels aufweist, in welcher die Öffnung für das verriegelnde Ende des Federdrahtes angeordnet ist, und dass die rohrförmigen Bauteile nur so weit zusammensteckbar sind, dass der Halteflansch am ersten rohrförmigen Bauteil am kurzen Mantelende des zweiten rohrförmigen Bauteiles bündig anschliesst und durch die Öffnung in dem verlängerten Mantelende hindurch verriegelbar ist.

Weitere Ausführungsformen und Vorteile der Erfindung ergeben sich durch die in den Ansprüchen ferner aufgeführten Merkmale, sowie durch die nachstehend angegebenen Ausführungsbeispiele. Die Merkmale der Ansprüche können in beliebiger Weise miteinander kombiniert werden, soweit sie sich nicht offensichtlich gegenseitig ausschliessen.

KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung entnehmbaren Merkmale können einzeln für sich oder zu mehreren in beliebiger Kombination erfindungsgemäss angewandt werden. Es zeigen:

Fig. 1a eine schematische Schnittdarstellung einer erfindungsgemässen Schnellkupplungs-Vorrichtung mit einem auf einem rohrförmigen Bauteil abgestützten Federdraht als Halteeinheit,

Fig. 1b eine Schnittdarstellung der Vorrichtung gemäss Fig. 1a entlang der Schnittführung A-A gemäss Fig. 1a,

Fig. 1c eine schematische Aufsicht der Vorrichtung gemäss Fig. 1a,

Fig. 2a eine Variante der Vorrichtung gemäss Fig. 1a, bei der ein Teil des Federdrahtes eine quer zum rohrförmigen Bauteil orientierte Spirale aufweist,

Fig. 2b eine schematische Aufsicht der Vorrichtung gemäss Fig. 2a,

Fig. 3 eine Variante der Vorrichtung gemäss Fig. 1a, bei der ein Teil des Federdrahtes eine, eine Verriegelungsöffnung an einem Ende des rohrförmigen Bauteiles überragende Spange aufweist,

Fig. 4 eine Variante der Vorrichtung gemäss Fig. 1a, bei der ein Teil des Federdrahtes einen serpentinenartigen Verlauf aufweist,

Fig. 5 eine Variante der Vorrichtung gemäss Fig. 1a, bei der ein Teil des Federdrahtes eine zum rohrförmigen Bauteil koaxiale Spirale mit sich konisch erweiternden Windungen durchläuft,

Fig. 6 eine Variante der Vorrichtung gemäss Fig. 1a, bei der ein Teil des Federdrahtes eine zum rohrförmigen Bauteil koaxiale Spirale mit einem anschliessenden Abschnitt zum Abheben eines verriegelnden Endes aufweist,

Fig. 7 eine Variante der Vorrichtung gemäss Fig. 1a, bei der ein in einer Radialebene auf dem rohrförmigen Bauteil abgestützter Teil des Federdrahtes in einer Nut fixiert ist,

Fig. 8 eine Variante der Vorrichtung gemäss Fig. 1a, bei der ein Teil des Federdrahtes eine zum rohrförmigen Bauteil koaxiale Spirale mit einem über die Spirale hinweggeführten Abschnitt zum Abheben eines verriegelnden Endes aufweist,

Fig. 9 eine Variante der Vorrichtung gemäss Fig. 1a, bei der der Federdraht zwei verriegelnde Enden umfasst, welche über symmetrisch angeordnete Längsbügel und eine Spiralwindung auf dem rohrförmigen Bauteil abgestützt sind,

Fig. 10a einen schematischen Querschnitt einer Öffnung für ein verriegelndes Ende des Federdrahtes in dem rohrförmigen Bauteil gemäss Fig. 1a,

Fig. 10b eine Variante einer Öffnung gemäss Fig. 10a,

Fig. 11a, 11b, 11c schematische Querschnitte von Abstützungen des Federdrahtes in einer Radialebene auf einem rohrförmigen Bauteil gemäss Fig. 1a,

Fig. 12a, 12b Querschnitte eines Federdrahtes gemäss Fig. 1a,

Fig. 13a einen schematischen Querschnitt einer Anordnung von mehreren Schnellkupplungs-Vorrichtungen gemäss Fig. 1a mit einem Schaltwerkzeug zur Entriegelung,

Fig. 13b einen Querschnitt des Schaltwerkzeuges längs der Schnittführung A-A gemäss Fig. 13a,

Fig. 14a einen schematischen Querschnitt einer Variante der Vorrichtung gemäss Fig. 1a längs der Schnittführung A-A in Fig. 14b, bei der das rohrförmige Bauteil einen teilweise zurückgesetzten Hals besitzt, und

Fig. 14b eine Aufsicht auf die Vorrichtung gemäss Fig. 14a.

## WEGE ZUM AUSFÜHREN DER ERFINDUNG

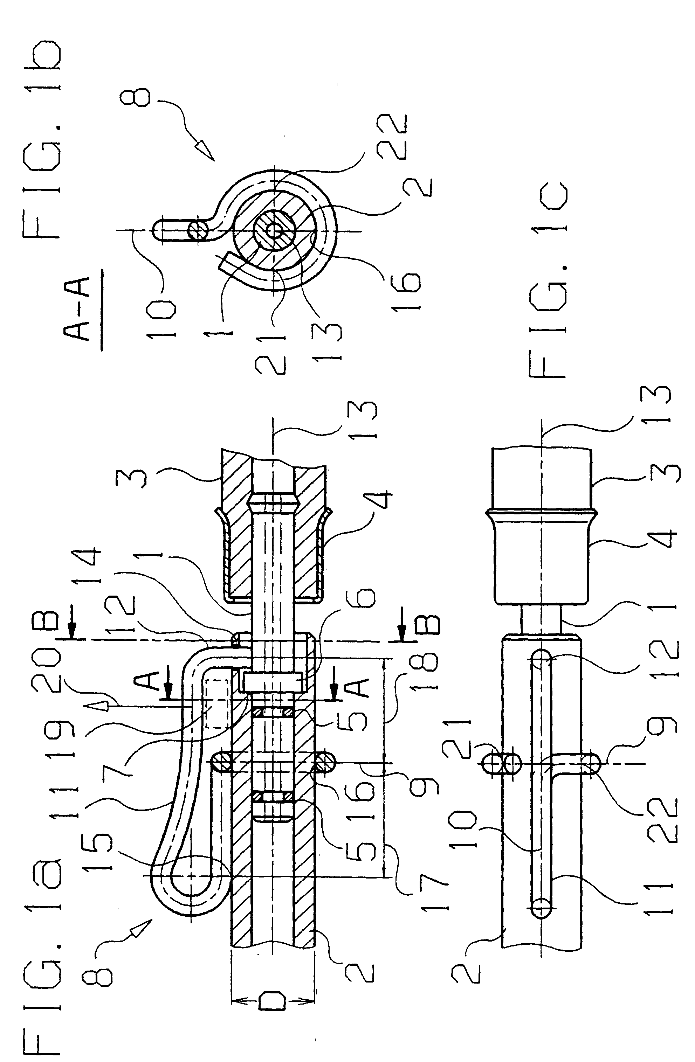

Wie die schematische Schnittdarstellung einer erfindungsgemässen Schnellkupplungs-Vorrichtung gemäss Fig. 1a zeigt, ist ein erstes rohrförmiges Bauteil 1 mit einem zweiten rohrförmigen Bauteil 2 durch Zusammenstecken der Enden lösbar verbunden. Der Aussendurchmesser des ersten Bauteiles 1 ist gleich dem Innendurchmesser des zweiten Bauteiles 2, dessen Aussendurchmesser wiederum grösser ist, als jener des ersten Bauteiles 1. Das andere Ende des ersten Bauteiles 1 ist mit einem weiterführenden Schlauch 3 über eine Presshülse 4 fest verbunden.

Das erste Bauteil 1 ist durch zwei O-Ringe 5 gegen das zweite Bauteil 2 abgedichtet und trägt einen Halteflansch 6, welcher bis zu einem Anschlag 7 in das zweite Bauteil 2 eingeschoben ist. Als Halteeinheit für den Halteflansch 6 ist ein Federdraht 8 an dem zweiten Bauteil 2 befestigt. Der Federdraht 8 umschlingt das zweite Bauteil 2, wie insbesondere der Querschnitt der Fig. 1b längs einer Schnittebene A-A zeigt, in einer Radialebene 9 und durchläuft anschliessend in einer axial gelegenen Ebene 10 eine Federspange 11. Ein an die Federspange 11 anschliessendes Ende 12 des Federdrahtes 8 ist senkrecht zur gemeinsamen Achse 13 der Bauteile 1 und 2 abgebogen, durchdringt eine Bohrung 14 in der Wand des zweiten Bauteiles 2 und liegt federnd auf dem ersten Bauteil 1 auf, dessen Halteflansch 6 es verriegelnd hintergreift.

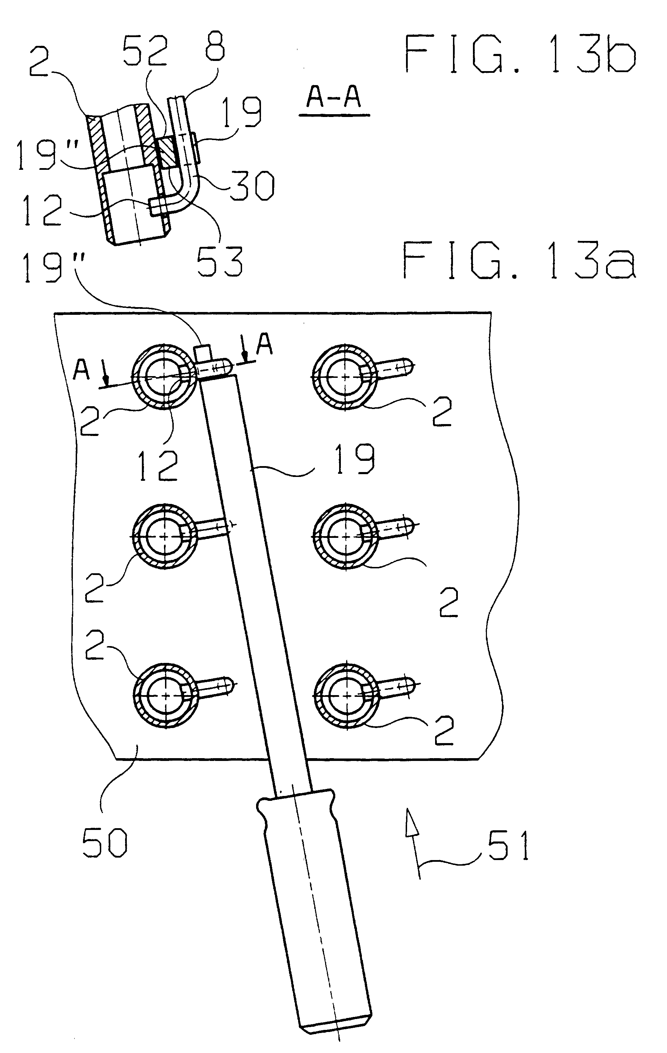

Der Federdraht 8 ist also mindestens durch einen Auflagepunkt 15 der Federspange 11 und durch einen Auflagepunkt 16 in der Radialebene 9 auf gegenüber liegenden Seiten an dem zweiten Bauteil 2 abgestützt. Der Abstand 17 zwischen dem Auflagepunkt 15 und der Radialebene 9 und der Abstand 18 zwischen der Radialebene 9 und dem Ende 12 des Federdrahtes 8 sind vorzugsweise beide etwa gleich dem zweifachen Aussendurchmesser 2D des Bauteiles 2. Zum Anheben des Endes 12 in Richtung des Pfeiles 20 beim Öffnen der Schnellkupplungs-Vorrichtung dient ein Werkzeug 19, wie es in Fig. 13a genauer gezeigt ist. Beim Anheben des Federdrahtes 8 in Richtung des Pfeiles 20 wird also ein Gegendrehmoment über Auflagepunkte 15 und 16 am Bauteil 2 aufgenommen. Wie der Querschnitt der Fig. 1b zeigt, erreicht die federnde Umschlingung des Bauteiles 2 durch den Federdraht 8 in der Radialebene 9 mehr als 180 Grad. Die Längsfixierung des Federdrahtes 8 ist daher über diametrale Auflagepunkte 21, 22 in der Radialebene 9 und die Bohrung 14 am Bauteil 2 gegeben.

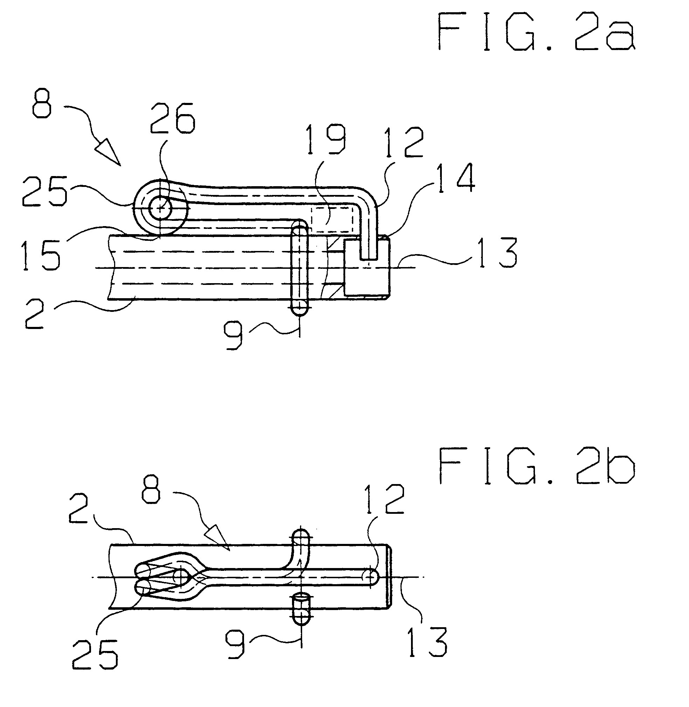

Fig. 2a zeigt in einem Teilschnitt eine Variante der Vorrichtung gemäss Fig. 1a, bei der gleiche Bezugszeichen auf entsprechende Elemente hinweisen. Die Federspange 11 des Federdrahtes 8 gemäss Fig. 1a weist gemäss Fig. 2a noch eine Spirale 25 auf, deren Achse 26 quer zur Achse 13 des zweiten rohrförmigen Bauelementes 2 liegt. Ziel dieser Spirale 25 ist es, im Falle von besonders grossen Querschnitten des Federdrahtes 8 bei grossen Haltekräften des verriegelnden Endes 12 und bei eingeschränkten Platzverhältnissen eine Überdehnung der Feder zu vermeiden. Solche Überdehnungen könnten sonst beim Anheben des Endes 12 des Federdrahtes 8 mit dem Werkzeug 19 auftreten. Fig. 2b zeigt eine Aufsicht auf den Federdraht 8 und die Spirale 25.

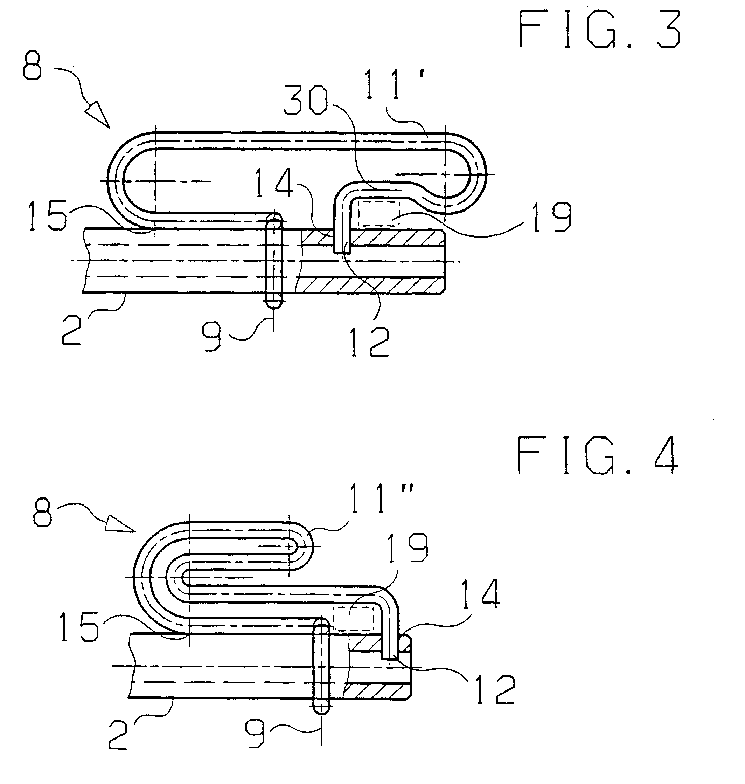

Fig. 3 zeigt eine Variante der Vorrichtung gemäss Fig. 1a, bei der ein Teil des Federdrahtes 8 eine, eine Verriegelungsöffnung 14 an einem Ende des zweiten rohrförmigen Bauteiles 2 überragende Spange 11' aufweist. Durch diese Ausbildung ist der beim Anheben des Endes 12 des Federdrahtes 8 zur Entriegelung federnd wirksame Teil des Federdrahtes 8 verlängert, womit eine Verbesserung der Federeigenschaften erreicht wird. Ein als Schaltstelle für das Werkzeug 19 wirksamer Abschnitt 30 des Federdrahtes 8 ist gegenüber der Ausführung gemäss Fig. 1a in Fig. 3 zum Ende des Bauteiles 2 hin verschoben.

Eine ähnliche Verbesserung der Federeigenschaften wird auch bei einer Ausführung der Schnellkupplungs-Vorrichtung gemäss Fig. 4 erreicht. Hierbei weist der zur Entriegelung federnd wirksame Teil 11" des Federdrahtes 8 einen serpentinenartigen Verlauf auf.

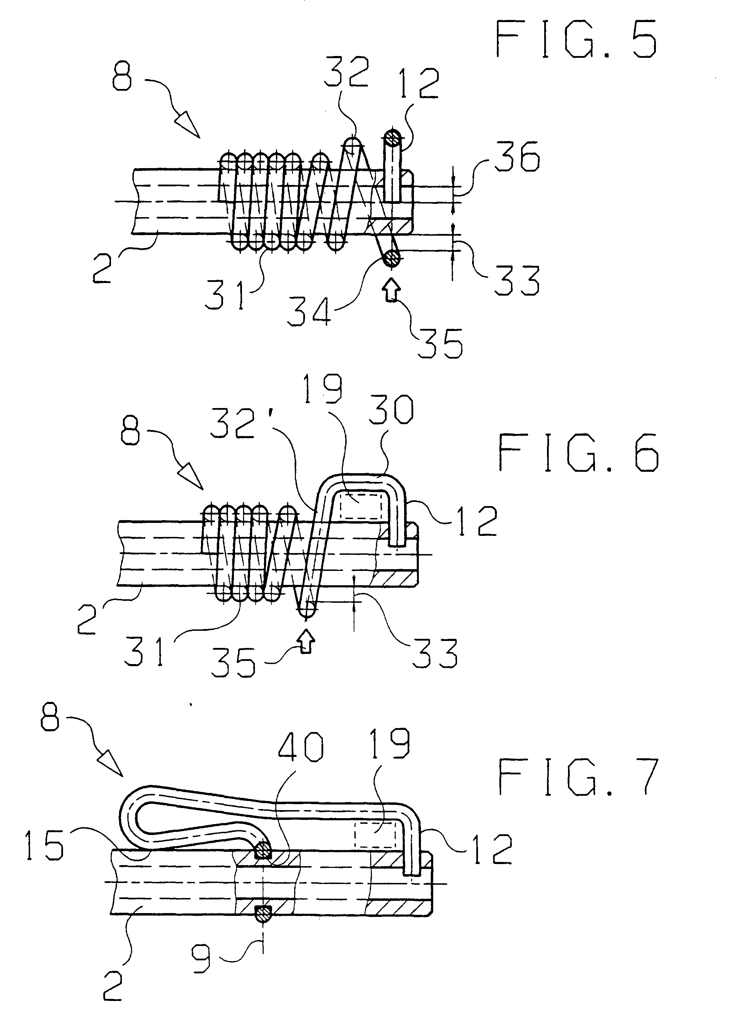

Fig. 5 zeigt eine Variante der Vorrichtung gemäss Fig. 1a, bei der ein Teil des Federdrahtes 8 eine zum zweiten rohrförmigen Bauteil 2 koaxiale Spirale durchläuft. Diese Spirale umfasst einen ersten Teil 31 mit einer Anzahl Windungen, welche auf dem Bauteil 2 federnd aufliegen und der Längsfixierung des Federdrahtes 8 dienen. Ein zweiter Teil 32 der Spirale umfasst eine Anzahl von sich aufeinanderfolgend konisch erweiternden Windungen, deren letzte mit dem grössten Durchmesser in das verriegelnde Ende 12 des Federdrahtes 8 übergeht. Zum Entriegeln weist die das Ende 12 tragende Windung an einem Teil 34 diagonal gegenüber dem Ende 12 einen Abstand 33 über dem Bauteil 2 auf. Übt man auf das Teil 34 in Richtung des Pfeiles 35 eine entsprechende radiale Kraft aus, so wird das Ende 12 um einen Schaltweg 36 angehoben und entriegelt einen Halteflansch 6 der in Fig. 1a gezeigten Art.

Auch Fig. 6 zeigt eine Variante der Vorrichtung gemäss Fig. 1a, bei der ein Teil des Federdrahtes 8 eine zum rohrförmigen Bauteil 2 koaxiale Spirale mit einem anschliessenden Abschnitt zum Abheben eines verriegelnden Endes 12 aufweist. Diese Spirale umfasst einen ersten Teil 31 mit einer Anzahl Windungen, welche auf dem Bauteil 2 federnd aufliegen und der Längsfixierung des Federdrahtes 8 dienen. Ein zweiter Teil 32' der Spirale umfasst einen als Schaltzone für das Werkzeug 19 wirksamen Abschnitt 30 des Federdrahtes 8, wobei der Abstand zwischen Federdraht 8 und Bauteil 2 bis zum Abschnitt 30 soweit zunimmt, dass ein Einführen des Werkzeuges 19 und ein Anheben des verriegelnden Endes 12 um eine passende Strecke 33 möglich ist. Dabei kann ein solches Anheben zur Entriegelung sowohl mit dem Schaltwerkzeug 19 aus einer gewissen Entfernung erfolgen, als auch durch direkten seitlichen Druck auf den Teil 32' in Richtung des Pfeiles 35.

Fig. 7 zeigt eine Variante der Vorrichtung gemäss Fig. 1a, bei der der in der Radialebene 9 auf dem rohrförmigen Bauteil 2 abgestützte Teil des Federdrahtes 8 in einer Nut 40 fixiert ist. Diese Ausführung verbessert die Fixierung des Federdrahtes 8 auf dem Bauteil 2.

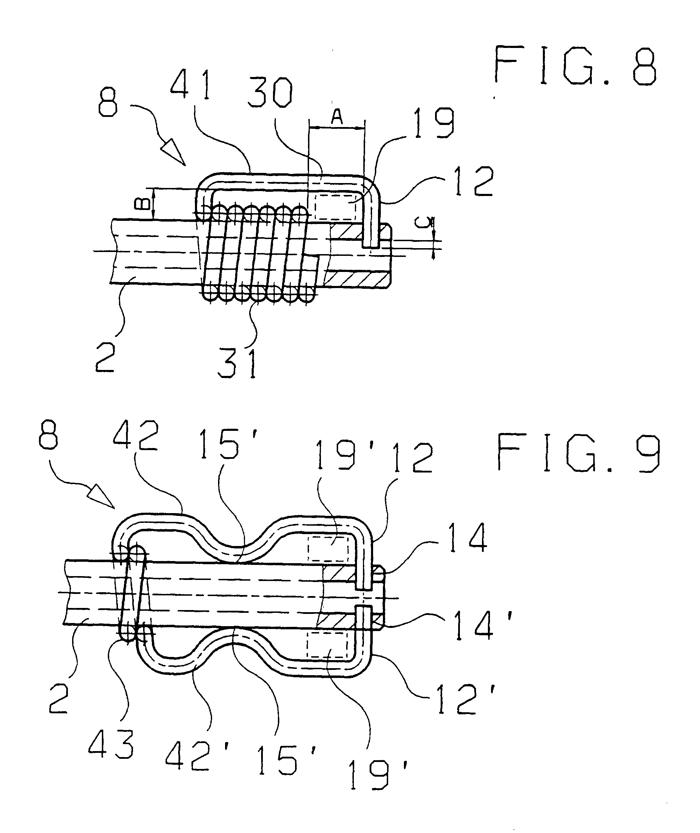

Fig. 8 zeigt eine Variante der Vorrichtung gemäss Fig. 1a, bei der ein Teil des Federdrahtes 8 eine zum rohrförmigen Bauteil 2 koaxiale Spirale 31 aufweist. Ein gestreckter Teil 41 des Federdrahtes 8 ist über die Spirale 31 hinweggeführt und mündet in einen als Schaltstelle für das Werkzeug 19 wirksamen Abschnitt 30 mit dem anschliessenden Ende 12 zur zur Verriegelung ein. Die Kombination der Spirale 31 mit dem gestreckten Teil 41 verbessert die Federeigenschaften der Halteeinheit 8. Das Abheben des Endes 12 zur Entriegelung kann problemlos erfolgen, solange der Abstand A zwischen der Spirale 31 und dem Ende 12 des Federdrahtes 8 grösser ist, als die Summe des Abstandes B zwischen dem gestreckten Teil 41 und dem Bauteil 2 und des Hubes C des Endes 12 bei der Entriegelung:

$$A > B + C.$$

Fig. 9 zeigt eine Variante der Vorrichtung gemäss Fig. 1a, bei der der Federdraht 8 zwei verriegelnde Enden 12 und 12' umfasst, welche über zwei längs des Bauteiles 2 symmetrisch angeordnete Längsbügel-Teile 42 und 42' und eine Spiralwindung 43 auf dem rohrförmigen Bauteil 2 abgestützt sind. Bei dieser Ausführung ist für jedes Ende 12 bzw. 12' eine Öffnung 14 bzw. 14' in dem Bauteil 2 angeordnet. Zur Entriegelung ist in diesem Fall ein zweiteiliges Werkzeug 19' mit einer Spreizwirkung zwischen den Teilen vorgesehen.

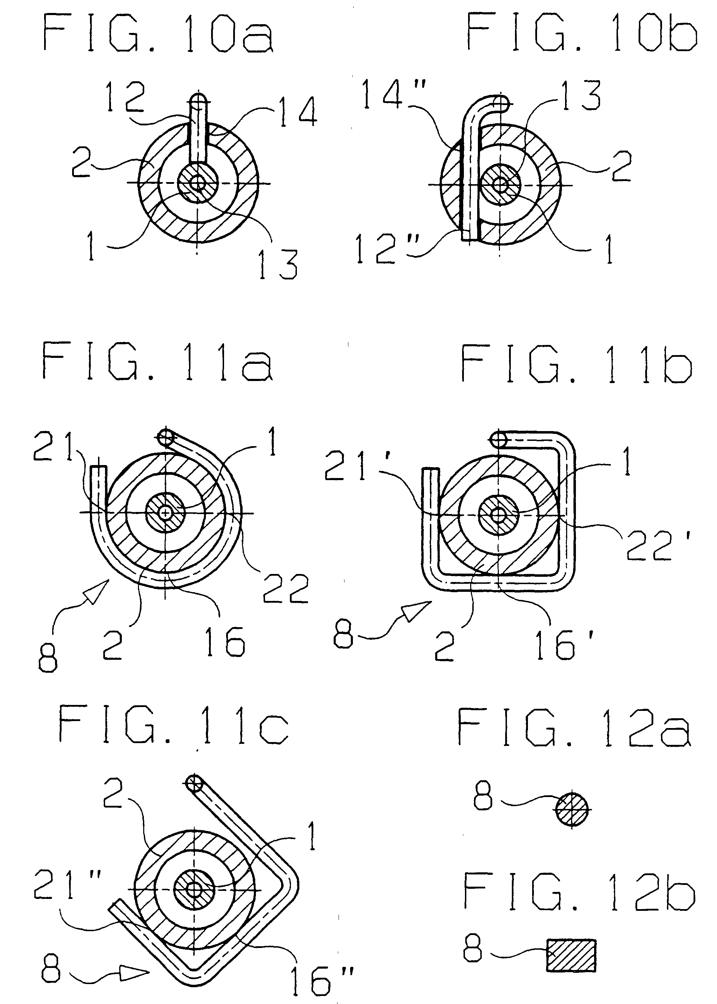

Bei den Ausführungsbeispielen gemäss den Fig. 1 bis 9 sind alle senkrecht zu der gemeinsamen Achse 13 der rohrförmigen Bauteile 1 und 2 ausgerichteten Enden 12, 12' des Federdrahtes 8 radial im Bauteil 2 angeordnet. Einen schematischen Querschnitt eines derart in einer Öffnung 14 im Bauteil 2 radial angeordneten Endes 12 zeigt Fig. 10a. Fig. 10b zeigt in einem Radialschnitt eine Variante der Anordnung gemäss Fig. 10a, bei der ein Ende 12" des Federdrahtes 8 gemäss Fig. 1a durch eine geeignete Öffnung 14" im Bauteil 2 in einem Abstand an der Achse 13 vorbei läuft, welcher gleich dem Aussenradius des ersten Bauteiles 1 ist. Gegenüber der Anordnung gemäss Fig. 1a hat jene gemäss Fig. 10b den Vorteil einer grösseren Haltesicherheit, wobei allerdings die als Dreharm wirksame Federspange 11 (Fig. 1a) hinreichend lang sein muss, damit die Orientierungsänderung des Endes 12" beim Entriegeln nicht zu einem Verklemmen in der Öffnung 14"

führt.

Die Fig. 11a, 11b, 11c zeigen schematische Querschnitte von Abstützungen des Federdrahtes 8 in einer Radialebene auf einem rohrförmigen Bauteil 2 gemäss Fig. 1a. Die Abstützung gemäss Fig. 11a entspricht jener der Fig. 1b mit den Auflagepunkten 16, 21, 22 und weiteren Auflagepunkten längs der kreisförmigen Umschlingung des Federdrahtes 8. Nur drei isolierte Auflagepunkte 16', 21', 22' des Federdrahtes 8 zeigt die Fig. 11b, wobei durch die Federspannung an den diametralen Auflagepunkten 21', 22' noch eine gewisse Längsfixierung des Federdrahtes 8 am rohrförmigen Bauteil 2 gegeben ist. Eine genügende Längsfixierung ist aber in allen Fällen durch die Fixierung des Endes 12 des Federdrahtes 8 in der Öffnung 14 des Bauteiles 2 gegeben (Fig. 1a). Fig. 11c zeigt, dass als Minimum eine Auflage des Federdrahtes 8 in der Radialebene 9 (Fig. 1a) in nur zwei Auflagepunkten 16", 21" genügt, wobei die Längsfixierung des Federdrahtes 8 vollständig von der Öffnung 14 (Fig. 1a) übernommen wird.

Fig. 12a, 12b zeigen bevorzugte Querschnitte des Federdrahtes 8 gemäss Fig. 1a. Gegenüber der üblichen Kreisform von Fig. 12a bietet eine Rechteckform gemäss Fig. 12b vorteilhaft eine bessere Längsfixierung durch eine Auflage mit einer flachen Seite in der Radialebene 9 gemäss Fig. 1a. Eine Rechteckform gemäss Fig. 12b ergibt sich auch, wenn man ebene Formen des Federdrahtes 8, vorteilhaft die Federspangen 11, 11', 11" mit Laser-Werkzeugen aus Blechen vorschneidet und anschliessend nur noch aus der Ebene abweichende Teile durch Biegen anformt.

Fig. 13a zeigt einen schematischen Querschnitt durch eine Anordnung von mehreren rohrförmigen Bauteilen 2, welche als Leitungsanschlüsse in eine Sammelplatte 50 münden. Jedes Bauteil 2 ist mit einer Schnellkupplungs-Vorrichtung gemäss Fig. 1a ausgerüstet. Die Schnittebene durch die Bauteile 2 gemäss Fig. 13a ist in Fig. 1a mit B-B bezeichnet. Fig. 13a zeigt neben den Bauteilen 2 in der axialen Aufsicht die verriegelnden Enden 12 der Federdrähte 8, welche die Bauteile 2 in den Öffnungen 14 (Fig. 1a) durchdringen. Es sei angenommen, dass die Schnellkupplungs-Vorrichtungen gemäss Fig. 13a zur Entriegelung nur einseitig in der Richtung des Pfeiles 51 zugänglich seien. Diese Entriegelung erfolgt mittels des Werkzeuges 19, welches, wie der Schnitt A-A gemäss Fig. 13b zeigt, einen rechteckförmigen Querschnitt besitzt. Das Werkzeug 19 wird mit einem verjüngten Ende 19" zwischen den Federdraht 8 und das Bauteil 2 eingeführt und hebt durch eine anschliessende Drehbewegung infolge seiner Rechteckform das verriegelnde Ende 12 in eine entriegelnde Lage an. Dabei rasten die Seitenflächen 52 bzw. 53 (Fig. 13b) des Endes 19" am Bauteil 2 bzw. am Federdraht 8 ein.

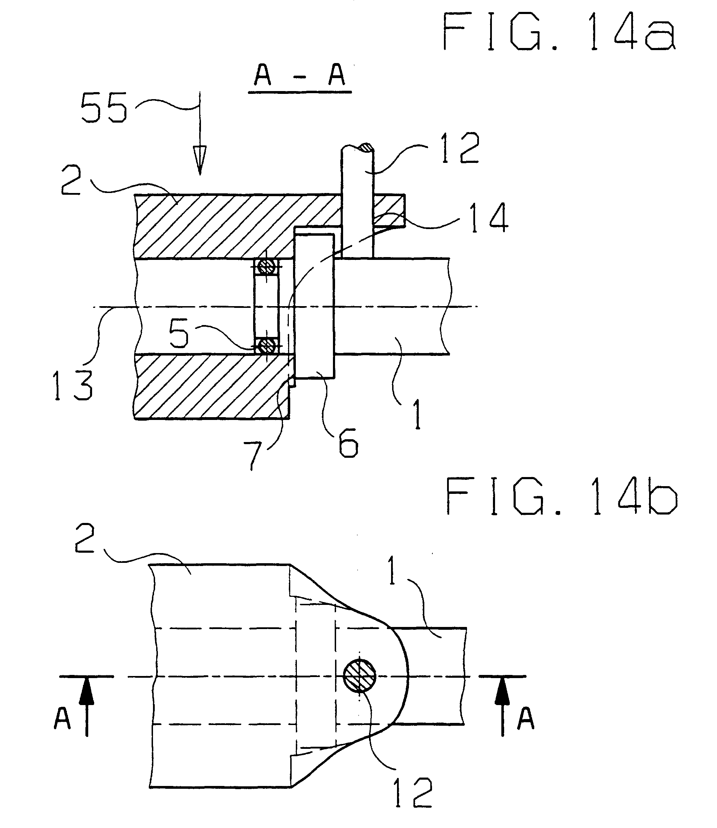

Fig. 14a zeigt einen schematischen Querschnitt einer Variante der Vorrichtung gemäss Fig. 1a, bei der gleiche Bezugszeichen auf entsprechende Bauelemente verweisen. Bei der Ausführung gemäss Fig.

1a verbleibt nach Einführung des ersten rohrförmigen Bauteiles 1 mit dem Halteflansch 6 in das zweite rohrförmige Bauteil 2 am Ende des Bauteiles 2 ein offener Zwischenraum, der sich schwer reinigen lässt. Dieser Zwischenraum ist bei der Ausführung gemäss Fig. 14a vermindert, indem das Ende des Bauteiles 2 im Bereich der Öffnung 14 für das verriegelnde Ende 12 vorspringt, jedoch in seinem übrigen Bereich bis zum Anschlag 7 für den Halteflansch 6 zurückgesetzt ist. Fig. 14b zeigt eine Aufsicht auf die Vorrichtung gemäss Fig. 14a in Richtung des Pfeiles 55, wobei die Schnittebene der Fig. 14a mit A-A bezeichnet ist.

Bei den in den Figuren 1 bis 14 dargestellten Ausführungsbeispielen der Erfindung hat das erste rohrförmige Bauteil 1 einen kleineren Aussendurchmesser als das zweite rohrförmige Bauteil 2. Als Abstützelement am ersten Bauteil 1 ist ein Halteflansch 6 vorgesehen und als Durchbruch im zweiten Bauteil 2 eine Bohrung 14 für das Ende 12 des Federdrahtes 8, welcher als Halteeinheit in mindestens zwei Punkten in der Radialebene 9 und in einem weiteren Punkt ausserhalb dieser Radialebene 9 an dem zweiten Bauteil 2 abgestützt ist.

Andere Ausführungsformen liegen ebenfalls im Umfang des unabhängigen Patentanspruches 1. Die Bauteile 1, 2 können auch gleiche Durchmesser haben, welche sich lediglich im Kupplungsbereich unterscheiden, um ein gegenseitiges Einstecken der Bauteile 1, 2 möglich zu machen. Als Abstützelement am ersten Bauteil 1 für das Ende 12 des Federdrahtes 8 eignen sich ausser dem Halteflansch 6 auch Nuten, Löcher oder andere Ausnehmungen, welche haltende Flanken aufweisen.

Die Auflagepunkte für den Federdraht 8 können sich am ersten oder auch am zweiten Bauelement 1, 2 axial verteilen oder nur auf die Radialebene 9 und deren unmittelbare Umgebung beschränken. Eine solche Beschränkung ist hinreichend, wenn der Federdraht 8 das Bauelement 1 oder 2 mit genügender Federkraft umschlingt oder in einer Nut angeordnet ist. Der Federdraht 8 kann auch auf dem rohrförmigen Bauelement 1 angeordnet sein, welches das Abstützelement 6 trägt. In diesem Fall wird das Bauelement 1 zweckmässig mit einer haltenden Flanke des Halteflansches 6 bis zu einem Anschlag 7 im Bauelement 2 eingeschoben. Dann kann das verriegelnde Ende 12 des Federdrahtes 8 zuverlässig in der richtigen axialen Lage in den Durchbruch 14 im Bauteil 2 einfedern, wobei dieser Durchbruch das Ende 12 mit dem Bauteil 1 am Bauteil 2 verriegelt. Durch geeignete Sperr- und Durchlassvorrichtungen an den ineinander eingeschobenen Teilen der Bauelemente 1, 2 im Kupplungsbereich lässt sich erreichen, dass das Ende 12 auch in der passenden Winkellage den Durchbruch 14 findet.

**Patentansprüche**

1. Schnellkupplungs-Vorrichtung eines ersten rohrförmigen Bauteiles (1) mit einem zweiten rohrförmigen Bauteil (2), wobei im Kupplungsbereich der Aussendurchmesser des ersten Bauteiles (1) nicht grösser ist, als der Innendurchmesser des zweiten Bauteiles (2), mit

   - mindestens einem Abstützelement (6) am ersten Bauteil (1) und mindestens einer Bohrung in der Wand des (14) zweiten Bauteiles (2) zur Aufnahme einer
   - elastisch verformbaren Halteeinheit, welche am ersten (1) oder am zweiten (2) Bauteil angebracht ist und
   - die im zusammengesteckten Zustand der rohrförmigen Bauteile (1, 2) das Abstützelement (6) gegen Herausziehen sichert, **dadurch gekennzeichnet, dass** die Halteeinheit als einstückiger Federdraht (8) ausgebildet ist, welcher
   - durch eine Auflage in mindestens zwei Punkten (16, 21, 22) in einer Radialebene (9) an der Aussenfläche des ersten (1) bzw. zweiten (2) Bauteiles und in mindestens einem weiteren Punkt (15) innerhalb oder ausserhalb der Radialebene (9) an dem ersten (1) bzw. zweiten (2) Bauteil abgestützt ist und
   - mindestens ein senkrecht zu der Achse (13) des ersten (1) bzw. zweiten (2) rohrförmigen Bauteiles ausgerichtetes Ende (12) aufweist, welches mindestens die Bohrung (14) im zweiten Bauteil (2) durchdringt, das Abstützelement (6) am ersten Bauteil (1) verriegelt und
   - gegen eine Federkraft der Halteeinheit radial in eine entriegelnde Lage angehoben werden kann.

2. Vorrichtung nach Anspruch 1, **dadurch gekennzeichnet, dass** der Federdraht (8) im Bereich seiner Auflage in mindestens zwei Punkten (16, 21, 22) in der Radialebene (9) die Form eines den Aussenumfang des zweiten Bauteiles (2) mindestens teilweise umschliessenden Ringes hat.

3. Vorrichtung nach Anspruch 2, **dadurch gekennzeichnet, dass** der Federdraht (8) anschliessend an den, das zweite rohrförmige Bauteil (2) umschliessenden Ring die Form einer aus mindestens zwei Windungen bestehenden Spirale (31, 32) hat.

4. Vorrichtung nach Anspruch 1, **dadurch gekennzeichnet, dass** die Radialebene (9) mit den mindestens zwei Auflagepunkten (16, 21, 22) zur Befestigung des Federdrahtes (8) am zweiten rohrförmigen Bauteil (2) axial zwischen dem von der Radialebene (9) beabstandeten weiteren Auflagepunk (15) und der Bohrung (14) liegt, an der das Abstützelement (6) verriegelnde Ende (12) des Federdrahtes (8) das zweite rohrförmige Bauteil (2) durchdringt.

5. Vorrichtung nach Anspruch 1, **dadurch gekennzeichnet, dass** ein erster Teil des Federdrahtes (8) in der Radialebene (9) mit mindestens zwei Auflagepunkten (16, 21, 22) liegt und ein zweiter Teil (11) in einer zu dieser Radialebene (9) senkrechten Ebene (10), welche die gemeinsame Achse (13) der zwei rohrförmigen Bauteile (1, 2) einschliesst.

6. Vorrichtung nach Anspruch 3, **dadurch gekennzeichnet, dass** mindestens ein Teil (32) der Spirale sich aufeinanderfolgend konisch erweiternde Windungen umfasst, wobei das verriegelnde Ende (12) des Federdrahtes (8) an die letzte Windung (34) mit dem grössten Durchmesser anschliesst.

7. Vorrichtung nach Anspruch 1, **dadurch gekennzeichnet, dass** der Federdraht (8) der Halteeinheit an jedem verriegelnden Ende einen Abschnitt (30) aufweist, welcher als Schaltstelle ein Abheben des Endes (12) mittels eines Werkzeuges (19) zur Entriegelung erlaubt.

8. Vorrichtung nach Anspruch 7, **dadurch gekennzeichnet, dass** der Abschnitt der Schaltstelle (30) im verriegelten Zustand eine freie Höhe über dem Aussenumfang des zweiten rohrförmigen Bauteiles (2) aufweist, welche kleiner ist, als der Aussendurchmesser (D) dieses zweiten Bauteiles (2).

9. Vorrichtung nach Anspruch 1, **dadurch gekennzeichnet, dass** die Längsachse des senkrecht zu der gemeinsamen Achse (13) der rohrförmigen Bauteile (1, 2) ausgerichteten verriegelnden Endes (12) des Federdrahtes (8) diese gemeinsame Achse (13) schneidet.

10. Vorrichtung nach Anspruch 1, **dadurch gekennzeichnet, dass** die Längsachse des senkrecht zu der gemeinsamen Achse (13) der rohrförmigen Bauteile (1, 2) ausgerichteten verriegelnden Endes (12) des Federdrahtes (8) an dieser gemeinsamen Achse (13) in einem Abstand vorbei läuft.

11. Vorrichtung nach Anspruch 1, **dadurch gekennzeichnet, dass** ein nicht in mindestens zwei Punkten in der Radialebene (9) am zweiten Bauteil (2) aufliegender Teil des Federdrahtes (8) eine Spirale (25) aufweist, deren Achse (26) senkrecht zur gemeinsamen Achse (13) der rohrförmigen Bauteile (1, 2) liegt.

12. Vorrichtung nach Anspruch 1, **dadurch gekennzeichnet, dass** ein nicht in mindestens zwei Punkten in der Radialebene (9) am zweiten Bauteil (2) aufliegender Teil (11") des Federdrahtes (8) einen serpentinenförmigen Verlauf aufweist.

13. Vorrichtung nach Anspruch 1, **dadurch gekennzeichnet, dass** der Federdraht (8) einen Querschnitt von Kreisform hat.

14. Vorrichtung nach Anspruch 1, **dadurch gekennzeichnet, dass** der Federdraht (8) einen Querschnitt von Rechteckform hat.

15. Vorrichtung nach Anspruch 1, **dadurch gekennzeichnet, dass** das zweite rohrförmige Bauteil (2) an seinem Einsteckende auf einer Seite seiner Längsachse eine vorsprungartige Verlängerung seines Mantels aufweist, in welcher die Bohrung (14) für das verriegelnde Ende (12) des Federdrahtes (8) angeordnet ist, und dass die rohrförmigen Bauteile (1, 2) nur so weit zusammensteckbar sind, dass das Abstützelement (6) am ersten rohrförmigen Bauteil (1) am kurzen Mantelende (7) des zweiten rohrförmigen Bauteiles (2) bündig anschliesst und durch die Bohrung (14) in dem verlängerten Mantelende hindurch verriegelbar ist.

## Claims

1. Quick-coupling device for a first tubular component (1) and a second tubular component (2), in which the outer diameter of the first component (1) does not exceed the inner diameter of the second component (2) in the coupling region, comprising

   - at least one supporting element (6) on the first component (1) and at least one bore (14) in the wall of the second component (2) for receiving an
   - elastically deformable holding device mounted on the first (1) or second (2) component and
   - preventing the withdrawal of the supporting element (6) in the assembled state of the tubular components (1, 2), **characterised in that** the holding device is in the form of a one-piece spring wire (8)
   - supported by means of a support at at least two points (16, 21, 22) in a radial plane (9) on the outer surface of the first (1) or second (2) component and at at least one further point (15) within or outside the radial plane (9) on the first (1) or second (2) component and
   - having at least one end (12) which is aligned perpendicularly to the axis (13) of the first (1) or second (2) tubular component, passes through at least the bore (14) in the second component (2), locks the supporting element (6) on the first component (1) and

- can be lifted radially into an unlocking position against the spring force of the holding device.

2. Device according to claim 1, **characterised in that** the spring wire (8) is in the form of a ring at least partially surrounding the outer circumference of the second component (2) in the region of its support at at least two points (16, 21, 22) in the radial plane (9).

3. Device according to claim 2, **characterised in that** the spring wire (8) is in the form of a spiral (31, 32) consisting of at least two turns following the ring surrounding the second tubular component (2).

4. Device according to claim 1, **characterised in that** the radial plane (9) with the at least two supporting points (16, 21, 22) for fixing the spring wire (8) to the second tubular component (2) is situated axially between the further supporting point (15) situated at a distance from the radial plane (9) and the bore (14) at which the end (12) of the spring wire (8) locking the supporting element (6) passes through the second tubular component (2).

5. Device according to claim 1, **characterised in that** a first part of the spring wire (8) is situated in the radial plane (9) with at least two supporting points (16, 21, 22) and a second part (11) is situated in a plane (10) perpendicular to this radial plane (9) and including the common axis (13) of the two tubular components (1, 2).

6. Device according to claim 3, **characterised in that** at least one part (32) of the spiral includes successively conically widening turns, the locking end (12) of the spring wire (8) following the last turn (34) with the largest diameter.

7. Device according to claim 1, **characterised in that** the spring wire (8) of the holding device is provided at each locking end with a portion (30) serving as a control point and allowing the end (12) to be lifted by means of a tool (19) for unlocking.

8. Device according to claim 7, **characterised in that** the portion of the control point (30) has a free height above the outer circumference of the second tubular component (2) smaller than the outer diameter (D) of this second component (2) in the locked state.

9. Device according to claim 1, **characterised in that** the longitudinal axis of the locking end (12) of the spring wire (8) aligned perpendicularly to the common axis (13) of the tubular components (1, 2) intersects this common axis (13).

10. Device according to claim 1, **characterised in that** the longitudinal axis of the locking end (12) of the spring wire (8) aligned perpendicularly to the common axis (13) of the tubular components (1, 2) runs past this common axis (13) at a distance.

11. Device according to claim 1, **characterised in that** a part of the spring wire (8) not resting on the second component (2) at at least two points in the radial plane (9) has a spiral (25), the axis (26) of which is situated perpendicularly to the common axis (13) of the tubular components (1, 2).

12. Device according to claim 1, **characterised in that** a part (11") of the spring wire (8) not resting on the second component (2) at at least two points in the radial plane (9) has a serpentine shape.

13. Device according to claim 1, **characterised in that** the spring wire (8) has a circular cross section.

14. Device according to claim 1, **characterised in that** the spring wire (8) has a rectangular cross section.

15. Device according to claim 1, **characterised in that** the second tubular component (2) is provided at its insertion end on one side of its longitudinal axis with a projection-like extension of its casing in which the bore (14) for the locking end (12) of the spring wire (8) is arranged and that the tubular components (1, 2) can only be assembled to such an extent that the supporting element (6) on the first tubular component (1) follows flush with the short casing end (7) of the second tubular component (2) and can be locked through the opening (14) in the extended casing end.

**Revendications**

1. Dispositif d'accouplement rapide d'un premier élément tubulaire (1) avec un deuxième élément tubulaire (2), le diamètre extérieur du premier élément (1) n'étant, dans la région d'accouplement, pas supérieur au diamètre intérieur du deuxième élément (2), avec

- au moins un élément de soutien (6) sur le premier élément (1) et au moins un perçage (14) dans la paroi du deuxième élément (2), afin de recevoir
- une unité de maintien élastiquement déformable, qui est installée sur le premier (1) ou le deuxième (2) élément,
- et qui, lorsque les éléments tubulaires (1, 2) sont emboîtés l'un dans l'autre, empêche l'extraction de l'élément de soutien (6),

**caractérisé en ce que** l'unité de maintien est réalisée sous forme de fil d'acier à ressort (8) d'un seul tenant,

- qui est soutenu sur le premier (1) ou le deuxième (2) élément par un appui en au moins deux points (16, 21, 22) dans un plan radial (9) sur la face extérieure du premier

    (1) ou du deuxième (2) élément, et en au moins un point supplémentaire (15) à l'intérieur ou à l'extérieur du plan radial (9),

- et qui présente au moins une extrémité (12) orientée perpendiculairement à l'axe (13) du premier (1) ou du deuxième (2) élément tubulaire, extrémité qui traverse au moins le perçage (14) dans le deuxième élément (2), verrouille l'élément de soutien (6) sur le premier élément (1),
- et peut être soulevée radialement dans une position de déverrouillage à l'encontre d'une force de ressort de l'unité de maintien.

2. Dispositif selon la revendication 1, **caractérisé en ce que** le fil d'acier à ressort (8) possède, dans la région de son appui en au moins deux points (16, 21, 22) dans le plan radial (9), la forme d'un anneau entourant au moins partiellement la circonférence extérieure du deuxième élément (2).

3. Dispositif selon la revendication 2, **caractérisé en ce que** le fil d'acier à ressort (8) possède, en raccordement à l'anneau entourant le deuxième élément tubulaire (2), la forme d'une spirale (31, 32) constituée d'au moins deux spires.

4. Dispositif selon la revendication 1, **caractérisé en ce que** le plan radial (9) comportant les au moins deux points d'appui (16, 21, 22) pour la fixation du fil d'acier à ressort (8) sur le deuxième élément tubulaire (2) se situe axialement entre le point d'appui supplémentaire (15) distant du plan radial (9) et le perçage (14) par lequel l'extrémité (12) du fil d'acier à ressort (8) qui verrouille l'élément de soutien (6) traverse le deuxième élément tubulaire (2).

5. Dispositif selon la revendication 1, **caractérisé en ce qu'**une première partie du fil d'acier à ressort (8) se situe dans le plan radial (9) par au moins deux points d'appui (16, 21, 22), et une deuxième partie (11) dans un plan (10) perpendiculaire à ce plan radial (9) et incluant l'axe commun (13) des deux éléments tubulaires (1, 2).

6. Dispositif selon la revendication 3, **caractérisé en ce qu'**au moins une partie (32) de la spirale comprend des spires s'élargissant successivement coniquement, l'extrémité de verrouillage (12) du fil d'acier à ressort (8) se raccordant à la dernière spire (34), qui présente le plus grand diamètre.

7. Dispositif selon la revendication 1, **caractérisé en ce que** le fil d'acier à ressort (8) de l'unité de maintien présente, à chaque extrémité de verrouillage, un tronçon (30) qui permet, en tant que point d'enclenchement, de soulever l'extrémité (12) au moyen d'un outil (19) pour le déverrouillage.

8. Dispositif selon la revendication 7, **caractérisé en ce que** le tronçon du point d'enclenchement (30) présente à l'état verrouillé une hauteur libre au-dessus de la circonférence extérieure du deuxième élément tubulaire (2) qui est inférieure au diamètre extérieur (D) de ce deuxième élément (2).

9. Dispositif selon la revendication 1, **caractérisé en ce que** l'axe longitudinal de l'extrémité de verrouillage (12) du fil d'acier à ressort (8), orientée perpendiculairement à l'axe commun (13) des éléments tubulaires (1, 2), coupe cet axe commun (13).

10. Dispositif selon la revendication 1, **caractérisé en ce que** l'axe longitudinal de l'extrémité de verrouillage (12) du fil d'acier à ressort (8), orientée perpendiculairement à l'axe commun (13) des éléments tubulaires (1, 2), passe à distance de cet axe commun (13).

11. Dispositif selon la revendication 1, **caractérisé en ce qu'**une partie du fil d'acier à ressort (8) qui ne repose pas en au moins deux points dans le plan radial (9) sur le deuxième élément (2) présente une spirale (25) dont l'axe (26) est perpendiculaire à l'axe commun (13) des éléments tubulaires (1, 2).

12. Dispositif selon la revendication 1, **caractérisé en ce qu'**une partie (11") du fil d'acier à ressort (8) qui ne repose pas en au moins deux points dans le plan radial (9) sur le deuxième élément (2) présente une allure en épingle à cheveux.

13. Dispositif selon la revendication 1, **caractérisé en ce que** le fil d'acier à ressort (8) possède une section de forme circulaire.

14. Dispositif selon la revendication 1, **caractérisé en ce que** le fil d'acier à ressort (8) possède une section de forme rectangulaire.

15. Dispositif selon la revendication 1, **caractérisé en ce que** le deuxième élément tubulaire (2) présente à son extrémité d'emboîtement, sur un côté de son axe longitudinal, un prolongement du genre saillie de son enveloppe dans lequel est disposé le perçage (14) pour l'extrémité de verrouillage (12) du fil d'acier à ressort (8), et **en ce que** les éléments tubulaires (1, 2) peuvent être emboîtés l'un dans l'autre seulement suffisamment profondément pour que l'élément de soutien (6) sur le premier élément tubulaire (1) se raccorde en affleurement à l'extrémité courte (7) de l'enveloppe du deuxième élément tubulaire (2) et puisse être verrouillé par l'ouverture (14) dans l'extrémité prolongée de l'enveloppe.

FIG. 1a

FIG. 1b

FIG. 1c

A-A

FIG. 2a

FIG. 2b

FIG. 3

FIG. 4

EP 1 082 569 B1

FIG. 5

FIG. 6

FIG. 7

14

FIG. 8

FIG. 9

FIG. 10a

FIG. 10b

FIG. 11a

FIG. 11b

FIG. 11c

FIG. 12a

FIG. 12b

FIG. 13b

FIG. 13a

FIG. 14a

A - A

55

2

12

14

5

13

7

6

1

FIG. 14b

2

1

A

A

12